# EUROPÄISCHE PATENTSCHRIFT

(11) **EP 2 720 819 B1**
(45) Veröffentlichungstag und Bekanntmachung des Hinweises auf die Patenterteilung: **02.08.2017**
(21) Anmeldenummer: 12728226.7
(22) Anmeldetag: 13.06.2012
(51) Int. Cl.: B23B 27/10, B23B 29/04, B23B 29/06

(54) **HALTER FÜR EINE SCHNEIDVORRICHTUNG**
HOLDER FOR A CUTTING DEVICE
PORTE-OUTIL POUR UN DISPOSITIF DE COUPE

(30) Priorität: 14.06.2011 DE 202011101852 U
(43) Veröffentlichungstag der Anmeldung: 23.04.2014
(73) Patentinhaber: Hartmetall-Werkzeugfabrik Paul Horn GmbH, 72072 Tübingen (DE)
(72) Erfinder: SCHAEFER, Hans, 72810 Gomaringen (DE)
(74) Vertreter: Witte, Weller & Partner Patentanwälte mbB
(86) Internationale Anmeldenummer: PCT/EP2012/061236
(87) Internationale Veröffentlichungsnummer: WO 2012/171976

(56) Entgegenhaltungen:
- WO-A1-2008/066473
- WO-A1-2008/066474

## Beschreibung

Die vorliegende Erfindung betrifft einen Halter für eine Schneidvorrichtung gemäß dem Oberbegriff des Patentanspruchs 1.

Aus der WO 2009/135592 A1 ist eine Schneidvorrichtung bekannt, die ein Halteteil mit einem länglichen Balkenteil aufweist. Ein an einem vorderen Bereich des Balkenteils angeordneter Klemmkopf steht mit einem Überstand über das Niveau einer Oberseite des Balkenteils über. An einer Längsseite des Balkenteils ist ein oberer Finger angeordnet, der mit einem unteren Finger eine Aufnahmetasche zur Aufnahme eines Schneideinsatzes bildet. Ein Klemmspalt, der eine elastische Schwenkbewegung des oberen Fingers ermöglicht, mündet in die Aufnahmetasche. Durch Anziehen einer mit einem Innengewinde zusammenwirkenden Klemmschraube wird der obere Finger mit einer nach unten, auf den unteren Finger zu gerichteten Spannkraft beaufschlagt, unter deren Einfluss der Schneideinsatz in der Aufnahmetasche zwischen den Fingern fest eingeklemmt wird. Bei den bekannten Lösungen sind alle Wege, die vom Balkenteil in den Überstand führen durch den Klemmspalt unterbrochen. Das heißt mit anderen Worten, dass bisher kein Weg am Klemmspalt vorbei führte. Daher wird ein Kühlmittel von außen über eine externe Kühlmittelzuführung in den Bearbeitungsbereich geleitet, in dem der Schneideinsatz mit dem Werkstück bearbeitend in Kontakt steht.

Der Kühlznittelstrahl muss exakt eingestellt werden, so dass bei unterschiedlichen Bauteilen die entsprechenden Düsen stets neu einjustiert werden müssen. Weitere Nachteile dieser bekannten Lösung bestehen darin, dass Werkzeugwechselvorgänge erschwert werden und die externen Zuleitungen leicht beschädigt werden können. Zudem stellt die externe Kühlmittelzuführung einen hohen apparativen Aufwand dar.

WO 2008/066473 A1 zeigt ein Schneidwerkzeug gemäß dem Oberbegriff des Anspruchs 1, mit einem austauschbaren Schneideinsatz und einem Grundkörper, welcher ein hinteres Befestigungsteil, ein vorderes Stützteil sowie ein Spannteil aufweist. Der Schneideinsatz wird zwischen dem Spannteil und dem Stützteil eingespannt. Das Befestigungsteil weist einen inneren Kanal zum Zuführen einer Kühlflussigkeit in Richtung des Schneideinsatzes auf. Dieser Kanal ist in zwei Teilkanäle unterteilt, so dass der Kanal über eine Brüche vom Befestigungsteil in das Spannteil mündet und eine im Stützteil vorgesehene Spannschraube überwindet.

WO 2008/066474 A1 zeigt ein dazu sehr ähnliches Werkzeug, bei dem das Kühlmittel über ein hohles Kopplungselement von dem Befestigungsteil in das Spannteil überführt wird.

Ausgehend von diesem Stand der Technik besteht die Aufgabe der vorliegenden Erfindung darin, eine unproblematische Kühl- und/oder Schmiermittelzuführung zu einem Arbeitsbereich bei minimalem apparativem und konstruktivem Aufwand bereitzustellen.

Die vorliegende Erfindung stellt zur Lösung der oben genannten Aufgabe einen Halter für eine Schneidvorrichtung mit einem Schneideinsatz bereit, wobei der Halter ein sich in einer Längsrichtung erstreckendes Balkenteil und einen Klemmkopf aufweist. Der Klemmkopf steht mit einem Überstand über eine Oberseite des Halters über. Dabei ist der Überstand mit einem ersten von zwei Klemmfingern verbunden, die zwischen sich eine Aufnahmetasche zur Aufnahme des Schneideinsatzes bilden. Unterhalb des Überstandes ist ein Klemmspalt zur Ermöglichung einer elastischen Beweglichkeit des ersten Klemmfingers vorgesehen. Der Klemmspalt mündet in die Aufnahmetasche und erstreckt sich von einer dem zu bearbeitenden Werkstück zugewandten Stirnseite des Halteteils in Längsrichtung bis zu seinem hinteren Ende, das im Übergangsbereich zwischen Klemmkopf und Balkenteil angeordnet ist. Im Halteteil verläuft eine Kühl- und/oder Schmiermittelführung zur Zuführung von Kühl- und/oder Schmiermittel zu einem im Überstand angeordneten Kühl- und/oder Schmiermittelauslass. Der Überstand erstreckt sich mit einem Fortsatzabschnitt in Längsrichtung über das hintere Ende des Klemmspalts hinaus. Die Kühlmittelzuführung verläuft durch den Fortsatzabschnitt. Ein geradliniger, um einen Winkel gegenüber der Längsrichtung geneigter Durchgangsabschnitt eines Kühl- und/oder Schmiermittelleitkanals erstreckt sich vom Balkenteil über den Fortsatzabschnitt in den Überstand. Die Klemmfinger sind an einer der Längsseiten des Halters angeordnet. Der Fortsatzabschnitt ist dagegen an der gegenüberliegenden Seite des Halters angeordnet. Des Weiteren ist ein sich quer zur Längsrichtung erstreckender Querabschnitt des Kühl- und/oder Schmiermittelleitkanals vorgesehen, welcher den Durchgangsabschnitt mit einem Endabschnitt verbindet, der in dem Kühl- und/oder Schmiermittelauslass endet.

Die Erfindung zeigt einen Weg, wie eine Kühl- und/oder Schmiermittelführung am Klemmspalt vorbei vom Balkenteil in den Überstand gelangen kann und schafft damit erstmals die Voraussetzungen dafür, dass die Kühl- und/oder Schmiermittelführung bei einem Klemmhalter vollständig bis zu einem stirnseitigen Austritt in das Halteteil integriert werden kann. Das Kühl- und/oder Schmiermittel kann nun durch das Halteteil über entsprechende Leitwege bis unmittelbar zu dem Bearbeitungsbereich hingeführt werden, wo es tatsächlich benötigt wird. Die erfindungsgemäß ausgebildete Schneidvorrichtung ermöglicht in einfacher Weise eine Kühl- und/oder Schmiermittelzuführung zum Arbeitsbereich. In nur einem Arbeitsgang kann sowohl das Werkzeug selbst montiert bzw. demontiert als auch die Kühl-und/oder Schmiermittelversorgung für das Werkzeug installiert bzw. getrennt werden. Unter dem Begriff "Arbeitsbereich" ist dabei der Bereich zu verstehen, in dem der Schneideinsatz mit einem Werkstück bearbeitend in Kontakt steht.

Erfindungsgemäß sind die Finger an einer der Längsseiten des Halteteils angeordnet, während der Fortsatzabschnitt an der gegenüberliegenden Längsseite des Halteteils angeordnet ist. Durch diese weit entfernte Lageranordnung des Fortsatzabschnitts bezüglich der Finger bleibt die elastische Schwenkbeweglichkeit für den oberen Finger erhalten.

Bei einer Ausführungsvariante der Erfindung beträgt eine Breite des Balkenteil ein Mehrfaches der Dicke des Fortsatzabschnitts. Das heißt mit anderen Worten, dass der Fortsatzabschnitt sehr schmal ist und damit nur einen geringen Einfluss auf die Eigenelastizität der Materialteile des Klemmkopfs hat.

Gemäß einer Ausgestaltung der Erfindung mündet der Kühl-und/oder Schmiermittelauslass auf einer quer zur Längsrichtung verlaufenden Frontfläche des oberen Fingers in den Raum. Hierdurch bekommt der Kühl- und/oder Schmiermittelstrahl, bevor er auf sein Ziel trifft, eine Komponente in Richtung der Schwerkraft, so dass die bei der Bearbeitung entstehenden Späne ihrerseits durch die Schwerkraft und mit Unterstützung des Kühl- und/oder Schmiermittelstrahls von Letzterem aufgenommen und mitgerissen werden.

Beispielsweise ist der Fortsatzabschnitt stegartig ausgebildet. Als Steg wird dabei ein flaches Element verstanden, das länger als breit ist. Ein Steg ist einfach herzustellen.

Gemäß einer Ausführungsvariante der Erfindung besteht der Fortsatzabschnitt aus dem gleichen Material wie das Halteteil. Insbesondere ist der Fortsatzabschnitt einteilig mit dem Halteteil ausgebildet. Dies hat den Vorteil, dass die separate Fertigung des Fortsatzabschnitts entfällt. Ferner erübrigt sich durch die Integration des Fortsatzabschnitts in das Halteteil der Montageschritt zur Befestigung des Fortsatzabschnitts am Halteteil.

Erfindungsgemäß erstreckt sich ein geradliniger, um einen Winkel gegenüber der Längsrichtung geneigter Durchgangsabschnitt eines Kühl- und/oder Schmiermittelleitkanals vom Balkenteil über den Fortsatzabschnitt in den Überstand. Ein geradliniger Durchgangsabschnitt kann beispielsweise einfach durch Bohren hergestellt werden und stellt einen kurzen, direkten Weg vom Balkenteil in den Überstand dar.

Bei einer Ausgestaltung der Erfindung ist der Durchgangsabschnitt nahe am hinteren Ende des Klemmspalts vorbeigeführt. Der Abstand zwischen dem Klemmspalt und dem Durchgangsabschnitt ist somit sehr gering und beide liegen dicht aneinander, so dass eine enge Bauform mit geringem Platzbedarf erreicht ist.

### Kurze Beschreibung der Zeichnungen

- Fig. 1: zeigt eine erfindungsgemäß ausgestaltete Schneidvorrichtung in einer perspektivischen Darstellung;
- Fig. 2: zeigt eine Vorderansicht der erfindungsgemäß ausgestalteten Schneid-vorrichtung;
- Fig. 3: zeigt eine Seitenansicht der erfindungsgemäß ausgestalteten Schneidvorrichtung;
- Fig. 4: zeigt das vergrößerte Detail X von Fig. 3;
- Fig. 5: zeigt einen Schnitt entlang der Linie B-B von Fig. 2;
- Fig. 6: zeigt einen Schnitt entlang der Linie C-C von Fig. 2;
- Fig. 7: zeigt einen vorderen Bereich der Schneidvorrichtung mit Schneideinsatz, in einer Seitenansicht;
- Fig. 8: zeigt einen Schnitt entlang der Linie D-D von Fig. 7;
- Fig. 9: zeigt einen Schnitt in Längsrichtung durch die Schneidvorrichtung;
- Fig. 10: zeigt einen Schnitt entlang der Linie A-A von Fig. 9; und
- Fig. 11: zeigt einen Schnitt entlang der Linie E-E von Fig. 9.

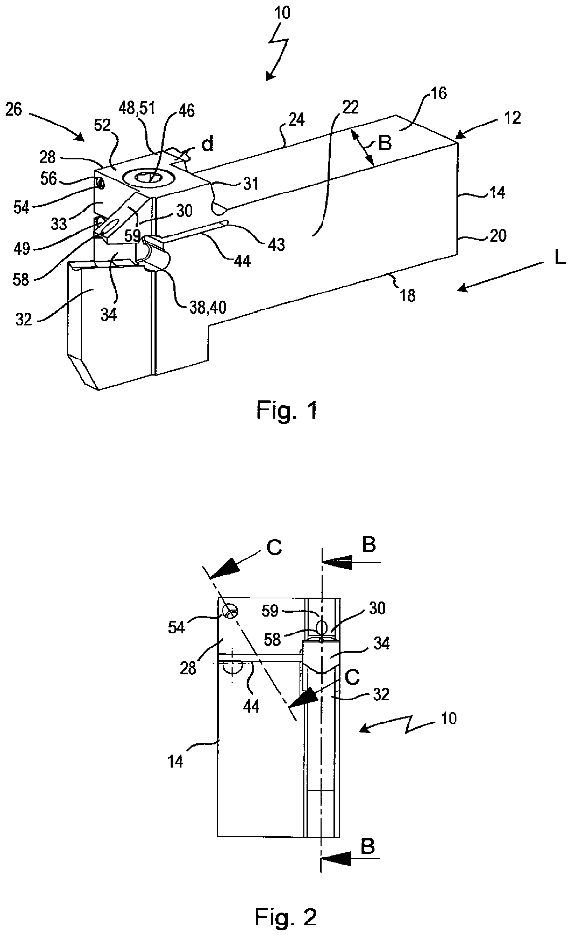

In den Fig. 1 bis 11 sind gleiche oder äquivalente Komponenten bzw. Teile mit den gleichen Bezugszeichen versehen.

Die in Fig. 1 in einer perspektivischen Darstellung gezeigte, erfindungsgemäß ausgestaltete Schneidvorrichtung weist zunächst ein Halteteil 12 auf. Letzteres weist ein sich in einer Längsrichtung L erstreckendes Balkenteil 14 auf, das nach oben durch eine plane Oberseite 16 und nach unten durch eine parallel zur Oberseite 16 angeordnete, in einer Gebrauchstellung nach unten weisende Unterseite 18 begrenzt ist. Nach hinten ist das Balkenteil 14 durch eine rechteckige ebenmäßige Rückseite 20 begrenzt.

Das Halteteil 12 weist ferner eine rechte Längsseite 24 sowie eine parallel im Abstand zu Letzterer angeordnete linke Längsseite 22 auf. Ein am vorderen Bereich des Balkenteils 14 angeordneter Klemmkopf 26 steht mit einem blockartigen, massiven Überstand 28 über das Niveau der Oberseite 16 über.

Von der quer zur Längsrichtung L verlaufenden vorderen Stirnseite 33 des Überstandes 28, die dem zu bearbeitenden (nicht dargestellten) Werkstück zugewandt ist, steht ein an der linken Längsseite 22 angeordneter oberer Finger 30 ab, der die Form eines flachen dreieckigen Prismas aufweist. Dem oberen Finger 30 liegt ein unterer Finger 32 gegenüber. Beispielsweise handelt es sich bei dem Werkstück um ein rotierendes Werkstück (Drehteil).

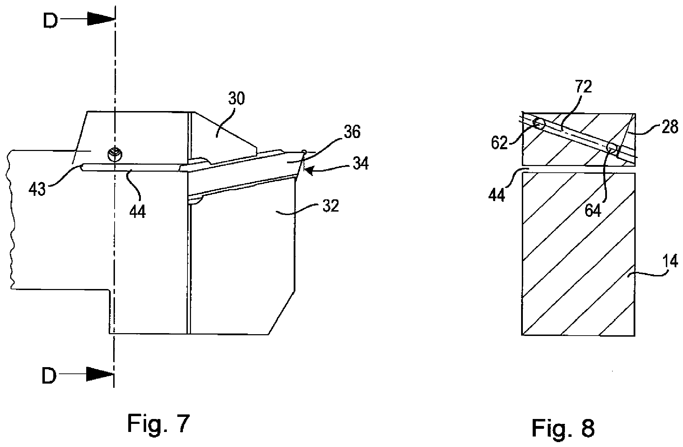

Der obere Finger 30 und der untere Finger 32 bilden zwischen sich eine Aufnahmetasche 36 zur Aufnahme des in Fig. 7 gezeigten Schneideinsatzes 36. Ein spitzes Ende des Schneideinsatzes 36 ragt in montiertem Zustand in eine Spitzenaufnahme 38, die nach hinten durch eine zylindrische Innenwand 40 begrenzt ist. Ein sich in Längsrichtung L bis zu einem hinteren Ende 42 erstreckender Klemmspalt 44 mündet in die Aufnahmetasche 34. Der Klemmspalt 44 ermöglicht eine elastische Schwenkbewegung des oberen Fingers 30 in einer parallel zu den Längsseiten 22, 24 des Balkenteils 14 angeordneten Ebene um eine geometrische Achse, die etwa im Bereich des hinteren Endes 43 des Klemmspalts 44 quer zur Längsrichtung L durch das Balkenteil 14 verläuft. Durch Anziehen einer mit einem Innengewinde zusammenwirkenden Klemmschraube 46 wird der obere Finger 30 mit einer nach unten, auf den unteren Finger 32 zu gerichteten Spannkraft beaufschlagt, unter deren Einfluss der Schneideinsatz 36 in der Aufnahmetasche 34 zwischen den Fingern 30, 32 fest eingeklemmt wird. Durch das Herausschrauben der Klemmschraube 46 wird der obere Finger 30 unter dem Einfluss seiner Eigenelastizität in Richtung auf seine Ruhelage (die Lage, die der obere Finger 30 ohne Einwirkung einer äußeren Kraft einnimmt) bewegt, wodurch die Aufnahmetasche 34 etwas auseinanderklafft und der Schneideinsatz 36 für einen Austausch freigegeben wird. Mit anderen Worten ist die Spannkraft, mit der der Schneideinsatz 36 in der Aufnahmetasche 34 festgeklemmt wird, durch Herausschrauben der Klemmschraube 46 aufhebbar. Der Klemmkopf 26 ist teilweise von einer Gegenlagerstelle in Form eines Stiftes 49 durchgriffen. Wird die Klemmschraube 46 im Rahmen des Festlegens des Schneideinsatzes 36 angezogen, kann sich die obere Wandfläche des Klemmspalts 44 an der Gegenlagerstelle abstützen.

Von einer nach hinten weisenden, der vorderen Stirnseite 30 des Überstandes 28 gegenüberliegenden hinteren Stirnseite 31 des Überstandes 28 steht ein Fortsatzabschnitt 48 ab, der hier als Steg 48 ausgebildet ist. Der Steg 48 ist auf der rechten Längsseite des Halteteils 12 angeordnet. Die Dicke d des Stegs 48 definiert als die Ausdehnung des Steges 48 in seitlicher, quer zur Längsrichtung L verlaufender Richtung ist klein bezogen auf die Breite B des Balkenteils 14. Beispielsweise beträgt die Breite B (definiert als Abstand zwischen den Längsseiten 22, 24) des Balkenteils 14 ein Vielfaches der Dicke d des Stegs 48. Durch den Steg 48 kann der hinderliche Klemmspalt 44 umgangen werden und der Kühlmittelleitkanal kann nun über den Steg 48 vom Balkenteil 14 in den Überstand 28 gelangen. Der Steg 48 stellt somit eine Lösung für das zuvor beschriebene Problem des im Wege stehenden Klemmspaltes 44 bereit.

Die nach oben weisende Oberseite 51 des Stegs 50 schließt bündig mit der Oberseite 52 des Überstandes 28 ab.

Der einstückig mit dem Halteteil 12 ausgebildete Steg 48 erstreckt sich -in einer zur Oberseite 16 oder Unterseite 18 des Balkenteils 14 parallelen Ebene projiziert betrachtet - in Längsrichtung L von der hinteren Stirnseite 31 des Überstandes 28 über das hintere Ende 43 des Klemmspalts 44 hinaus.

Eine auf der vorderen Stirnseite 33 des Überstandes 28 nach außen mündende überzählige Austrittsöffnung 54, in der ein unten näher beschriebener Durchgangsabschnitt 62 eines Kühlmittelleitkanals endet, ist mit einem Stopfen 56 dicht verschlossen.

In das massive Halteteil 12 sind sämtliche Leitungen des Kühlmittelleitkanals als Bohrungen eingebracht, wobei überzählige Öffnungen jeweils durch einen Stopfen 56 verschlossen werden.

Auf der schräg zur Längsrichtung L angeordneten Frontfläche 59 des oberen Fingers 30 mündet eine Auslassöffnung 58 in den Raum. In der Auslassöffnung 58 endet ein unten im Einzelnen beschriebener Endabschnitt 64 des Kühlmittelleitkanals. Im Betrieb tritt ein auf den Arbeitsbereich gerichteter (nicht dargestellter) Kühl- und/oder Schmiermittelstrahl aus der Auslassöffnung 58 aus.

Fig. 2 zeigt eine Vorderansicht der erfindungsgemäß ausgestalteten Schneidvorrichtung 10. Der Klemmspalt 44 durchdringt das Balkenteil 14 vollständig über dessen gesamte Breite B. Die lichte Weite der Aufnahmetasche 34 ist durch den Abstand der beiden Finger 30, 32 voneinander definiert. Die Auslassöffnung 58 befindet sich im Bereich des unteren Randes der Frontfläche 59 des oberen Fingers 30.

Die Austrittsöffnung 54 befindet sich in einem rechten oberen Eckbereich des Überstandes 28.

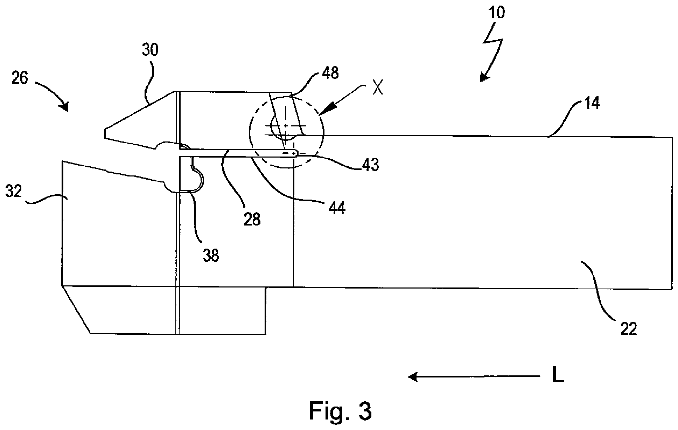

Fig. 3 zeigt eine Seitenansicht der erfindungsgemäß ausgestalteten Schneidvorrichtung 10. Der obere Finger 30 und der untere Finger 32 erstrecken sich an der linken Längsseite 22 der Schneidvorrichtung 10 jeweils parallel zur linken Längsseite 22 in Längsrichtung L, während der Steg 48 auf der gegenüberliegenden rechten Längsseite 24 des Balkenteils 14 angeordnet ist.

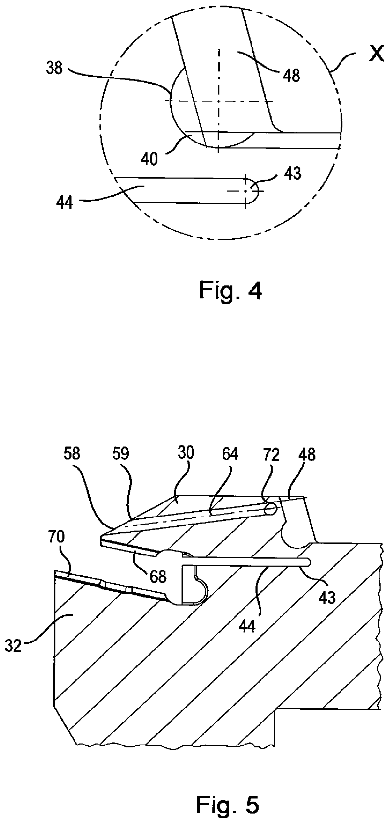

Fig. 4 zeigt das vergrößerte Detail X von Fig. 3. Auf der linken Längsseite 22 des Balkenteils 14 ist ein Abstand zwischen der Innenwand 40 der Spitzenaufnahme 38 und dem Klemmspalt 44 erforderlich, damit die Struktur des Balkenteils 14 in diesem Bereich durch zu nahe aneinanderliegende Ausnehmungen nicht zu stark geschwächt wird. Dies bedeutet im Umkehrschluss, dass ein Kühlmittelkanal, der theoretisch durch den Bereich zwischen der Innenwand 40 und dem Klemmspalt 44 verlaufen soll, einen so geringen Durchmesser haben müsste, dass der Strömungsquerschnitt zu klein wäre, um einen ausreichenden Kühlmitteldurchfluss zu erreichen.

Fig. 5 zeigt einen Schnitt entlang der Linie B-B von Fig. 2. Der Steg 48 weist einen rechteckigen Querschnitt auf. Der in der Auslassöffnung 58 endende Endabschnitt 64 des Kühlmittelleitkanals erstreckt sich mit Aufwärtstendenz von der Frontfläche 59 des oberen Fingers 30 nach hinten und mündet mit seinem hinteren Ende in einen oberen Querabschnitt 72 des Kühlmittelleitkanals.

Der obere Finger 30 weist eine obere Führungskante 68 auf, während der untere Finger 32 eine untere Führungskante 70 aufweist. Die beiden Führungskanten 68, 70 bilden jeweils mit einer am Schneideinsatz 36 vorgesehenen entsprechenden Nut, in die die Führungskanten 68, 70 eingreifen, eine Linearführung des Schneideinsatzes 36.

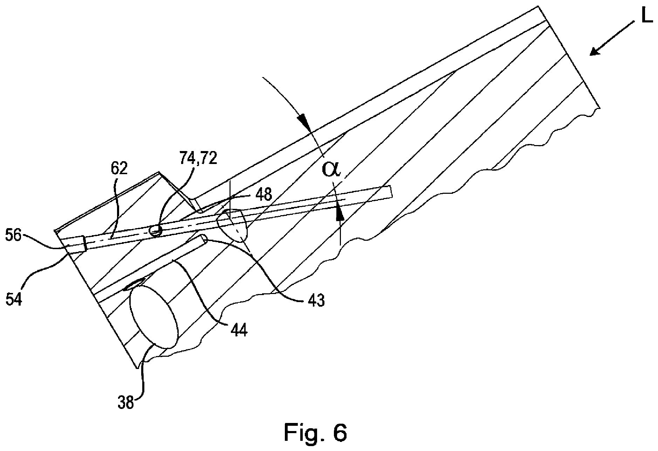

Fig. 6 zeigt einen Schnitt entlang der Linie C-C von Fig. 2. Der durch den Stopfen 56 abgedichtete, in der Austrittsöffnung 54 endende Durchgangsabschnitt 62 des Kühlmittelleitkanals verläuft in Bezug auf die Längsrichtung L schräg unter einem Winkel α durch den Steg 48. Der Winkel α beträgt beispielsweise 20°. Der quer zur Längsrichtung L verlaufende obere Querabschnitt 72 des Kühlmittelleitkanals mündet unter einem rechten Winkel in der Mündung 74 in den Durchgangsabschnitt 62.

Die geometrischen Abmessungen des Stegs, des Klemmspalts 44 und des Durchgangsabschnitts 62 sind erfindungsgemäß so gewählt, dass zwischen dem Klemmspalt 44 und dem Durchgangsabschnitt 62 ein Mindestabstand eingehalten wird, so dass das Balkenteil 14 in diesem Bereich eine ausreichende strukturelle Festigkeit aufweist.

Fig. 7 zeigt in einer Seitenansicht den vorderen Bereich der Schneidvorrichtung 10 mit eingesetztem Schneideinsatz 36. Der Schneideinsatz 36 ist zwischen den beiden Fingern 30, 32 mittels des oben beschriebenen Klemmmechanismus fest eingeklemmt.

Fig. 8 zeigt einen Schnitt entlang der Linie D-D von Fig. 7. In den sich von einem oberen rechten Eckbereich des Überstandes 28 in einen unteren linken Eckbereich des Überstandes 28 erstreckenden oberen Querabschnitt 72 des Kühlmittelleitkanals münden jeweils unter einem rechten Winkel einerseits der Endabschnitt 64 des Kühlmittelleitkanals und andererseits der Durchgangsabschnitt 62 des Kühlmittelleitkanals.

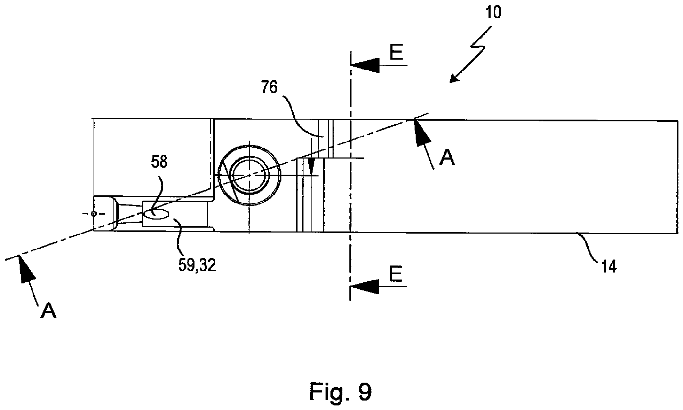

Fig. 9 zeigt einen Schnitt in Längsrichtung L durch die Schneidvorrichtung 10. Deutlich zu erkennen sind die Klemmschraube 46 sowie die Auslassöffnung 58 auf der Frontfläche 59 des oberen Fingers 32.

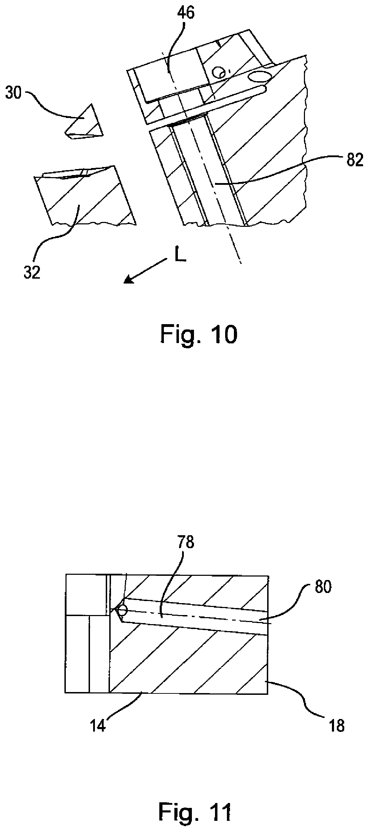

Ein sich quer zur Längsrichtung L erstreckender unterer Querabschnitt 76 des Kühlmittelleitkanals verbindet den Durchgangsabschnitt 62 mit dem in Fig. 11 ersichtlichen Anfangsabschnitt 78 des Kühlmittelleitkanals.

Fig. 10 zeigt einen Schnitt entlang der Linie A-A von Fig. 9. Die zwischen dem oberen Finger 30 und dem unteren Finger 32 gebildete Aufnahmetasche mündet in den Klemmspalt 44. Der Gewindeschaft 82 der Klemmschraube 64 erstreckt sich unter einem rechten Winkel zur Längsrichtung L.

Fig. 11 zeigt einen Schnitt entlang der Linie E-E von Fig. 9. Der Anfangsabschnitt 78 endet in einer auf der Unterseite 18 des Balkenteils 14 nach außen mündenden Eintrittsöffnung 80, die mit einer (nicht dargestellten) Kühlmittelquelle verbindbar ist.

Zusammenfassend stellt die Erfindung eine Möglichkeit dar, wie ein Kühl- und/oder Schmiermittelleitkanal in das Halteteil 12 integriert werden kann. Beispielweise, kann der geometrische Verlauf des Kühlmittelleitkanals innerhalb des Halteteils 12 unterschiedlich gestaltet sein. Der Fortsatzabschnitt 48 kann eine andere Form als die Stegform aufweisen. Ferner kann der Fortsatzabschnitt 48 sich zum Beispiel über einen Großteil der Breite B des Balkenteils 14 erstrecken.

## Patentansprüche

1. Halter (12) für eine Schneidvorrichtung (10) mit einem Schneideinsatz (36), wobei der Halter (12) ein sich in einer Längsrichtung (L) erstreckendes Balkenteil (14) und einen Klemmkopf (26) aufweist, der über eine Oberseite (16) des Halters (12) mit einem Überstand (28) übersteht, wobei der Überstand (28) mit einem ersten von zwei Klemmfingern (30, 32) verbunden ist, die zwischen sich eine Aufnahmetasche (34) zur Aufnahme des Schneideinsatzes (36) bilden, wobei unterhalb des Überstands (28) ein Klemmspalt (44) zur Ermöglichung einer elastischen Beweglichkeit des ersten Klemmfingers (30) vorgesehen ist, wobei der Klemmspalt (44) in die Aufnahmetasche (34) mündet, wobei sich der Klemmspalt (44) von einer dem zu bearbeitenden Werkstück zugewandten Stirnseite des Halters (12) in Längsrichtung (L) bis zu seinem hinteren Ende (43) erstreckt, das im Übergangsbereich zwischen Klemmkopf (26) und Balkenteil (14) angeordnet ist, wobei im Halter (12) eine Kühl- und/oder Schmiermittelführung (62, 64, 72, 76, 78) zur Zuführung von Kühl- und/oder Schmiermittel zu einem im Überstand (28) angeordneten Kühl- und/oder Schmiermittelauslass (58) verläuft, wobei der Überstand (28) sich mit einem Fortsatzabschnitt (48) in Längsrichtung (L) über das hintere Ende (43) des Klemmspalts (44) hinaus erstreckt und die Kühl- und/oder Schmiermittelführung (62) durch den Fortsatzabschnitt (48) verläuft, wobei sich ein geradliniger, um einen Winkel gegenüber der Längsrichtung (L) geneigter Durchgangsabschnitt (62) eines Kühl- und/oder Schmiermittelleitkanals vom Balkenteil. (14) über den Fortsatzabschnitt (48) in den Überstand (28) erstreckt,
**dadurch gekennzeichnet, dass** die Klemmfinger (30, 32) an einer der Längsseiten (22) des Halters (12) angeordnet sind und der Fortsatzabschnitt (48) an der gegenüberliegenden Längsseite (22) des Halters (12) angeordnet ist und dass ein sich quer zur Längsrichtung (L) erstreckender Querabschnitt (72) des Kühl-und/oder Schmiermittelleitkanals vorgesehen ist, welcher den Durchgangsabschnitt (62) mit einem Endabschnitt (64) verbindet, der in dem Kühl-und/oder Schmiermittelauslass (58) endet.

2. Schneidvorrichtung (10) mit einem Schneideinsatz (36) und einem Halter (12) gemäß Anspruch 1.

3. Schneidvorrichtung nach Anspruch 2, wobei eine Breite (B) des Balkenteils (14) ein Mehrfaches der Dicke (d) des Fortsatzabschnitts (48) beträgt.

4. Schneidvorrichtung nach einem der Ansprüche 2 bis 3, wobei der Kühl-und/oder Schmiermittelauslass (58) auf einer quer zur Längsrichtung (L) verlaufenden Frontfläche (59) des oberen Fingers (30) angeordnet ist.

5. Schneidvorrichtung nach einem der Ansprüche 2 bis 4, wobei der Fortsatzabschnitt (48) stegartig ausgebildet ist.

6. Schneidvorrichtung nach einem der Ansprüche 2 bis 5, wobei der Fortsatzabschnitt (48) aus dem gleichen Material wie das Halteteil (12) besteht.

7. Schneidvorrichtung nach einem der Ansprüche 2 bis 6, wobei der Fortsatzabschnitt (48) einteilig mit dem Halteteil (12) ausgebildet ist.

8. Schneidvorrichtung nach Anspruch 2, wobei der Durchgangsabschnitt (62) nahe am hinteren Ende (43) des Klemmspalts vorbeigeführt ist.

## Claims

1. A holder (12) for a cutting device (10) having a cutting insert (36), wherein the holder (12) has a beam part (14) which extends in a longitudinal direction (L) and a clamping head (26) which projects above a top side (16) of the holder (12) by way of a projection (28), wherein the projection (28) is connected to a first of two clamping fingers (30, 32) which between them form a receiving pocket (34) for receiving the cutting insert (36), wherein below the projection (28) a clamping gap (44) is provided to enable the first clamping finger (30) to be elastically movable, wherein the clamping gap (44) opens out into the receiving pocket (34), wherein the clamping gap (44) extends in the longitudinal direction (L) from an end face of the holder (12) facing a workpiece to be processed as far as up to a rear end (43) of the clamping gap (48), wherein the rear end (43) of the clamping gap (44) is arranged in a transition region between the clamping head (26) and the beam part (14), wherein a coolant and/or lubricant guiding channel (62, 64, 72, 76, 78) extends in the holder (12) for supplying coolant and/or lubricant to a coolant and/or lubricant outlet (58) arranged in the projection (28), wherein the projection (28) extends in the longitudinal direction (L) beyond the rear end (43) of the clamping gap (44) by way of a continuation portion (48) and the coolant and/or lubricant guiding channel (62) extends through the continuation portion (48), wherein a rectilinear through passage (62) of a coolant and/or lubricant guiding channel, said through passage being inclined by an angle in relation to the longitudinal direction (L), extends from the beam part (14) via the continuation portion (48) into the projection (28),
**characterized in that** the clamping fingers (30, 32) are arranged on one of the longitudinal sides (22) of the holder (12) and the continuation portion (48) is arranged on the opposite longitudinal side (22) of the holder (12), and that a transverse passage (72) of the coolant and/or lubricant guiding channel is provided, said transverse passage being arranged transverse to the longitudinal direction (L) and connecting the through passage (62) with an end passage (64) which ends in the coolant and/or lubricant outlet (58).

2. A cutting device (10) having a cutting insert (36) and a holder (12), wherein the holding part (12) as claimed in claim 1.

3. The cutting device as claimed in claim 2, wherein a width (B) of the beam part (14) is a multiple of a thickness (d) of the continuation portion (48).

4. The cutting device as claimed in one of claims 2 to 3, wherein the coolant and/or lubricant outlet (58) is arranged on a front face (59) of the top finger (30) which extends transversely with respect to the longitudinal direction (L).

5. The cutting device as claimed in one of claims 2 to 4, wherein the continuation portion (48) is realized in a web-like manner.

6. The cutting device as claimed in one of claims 2 to 5, wherein the continuation portion (48) consists of the same materials as the holding part (12).

7. The cutting device as claimed in one of claims 2 to 6, wherein the continuation portion (48) is realized integrally with the holding part (12).

8. The cutting device as claimed in claim 2, wherein the through passage (62) is guided past the rear end (43) of the clamping gap close to said rear end.

## Revendications

1. Porte-outil (12) pour un dispositif de coupe (10) avec une plaquette de coupe (36), dans lequel le porte-outil (12) présente une partie de barreau (14) s'étendant dans une direction longitudinale (L) et une tête de serrage (26), qui est saillante au-dessus d'un côté supérieur (16) du porte-outil (12) par une protubérance (28), dans lequel la protubérance (28) est reliée à un premier de deux doigts de serrage (30, 32), qui forment entre eux une fente de réception (34) destinée à recevoir la plaquette de coupe (36), dans lequel il est prévu en dessous de la protubérance (28) une fente de serrage (44) pour permettre une mobilité élastique du premier doigt de serrage (30), dans lequel la fente de serrage (44) débouche dans la fente de réception (34), dans lequel la fente de serrage (44) s'étend d'un côté frontal du porte-outil (12) tourné vers la pièce à usiner dans la direction longitudinale (L) jusqu'à son extrémité arrière (43), qui est disposée dans la région de transition entre la tête de serrage (26) et la partie de barreau (14), dans lequel un guide d'agent réfrigérant et/ou d'agent lubrifiant (62, 64, 72, 76, 78) s'étend dans le porte-outil (12) pour l'amenée d'agent réfrigérant et/ou d'agent lubrifiant à une sortie d'agent réfrigérant et/ou d'agent lubrifiant (58) disposée dans la protubérance (28), dans lequel la protubérance (28) s'étend avec une partie prolongée (48) en direction longitudinale (L) au-delà de l'extrémité arrière (43) de la fente de serrage (44) et le guide d'agent réfrigérant et/ou d'agent lubrifiant (62) s'étend à travers la partie prolongée (48), dans lequel une partie de passage rectiligne (62), inclinée d'un angle par rapport à la direction longitudinale (L), d'un canal de guidage d'agent réfrigérant et/ou d'agent lubrifiant s'étend de la partie de barreau (14) via la partie prolongée (48) jusque dans la protubérance (28),
**caractérisé en ce que** les doigts de serrage (30, 32) sont disposés sur un des longs côtés (22) du porte-outil (12) et la partie prolongée (48) est disposée sur le long côté opposé (22) du porte-outil (12) et **en ce qu'**il est prévu une partie transversale (72) du canal de guidage d'agent réfrigérant et/ou d'agent lubrifiant s'étendant transversalement à la direction longitudinale (L), qui relie la partie de passage (62) à une partie d'extrémité (64), qui se termine dans la sortie d'agent réfrigérant et/ou d'agent lubrifiant (58).

2. Dispositif de coupe (10) avec une plaquette de coupe (36) et un porte-outil (12) selon la revendication 1.

3. Dispositif de coupe selon la revendication 2, dans lequel une largeur (B) de la partie de barreau (14) vaut un multiple de l'épaisseur (d) de la partie prolongée (48).

4. Dispositif de coupe selon une des revendications 2 à 3, dans lequel la sortie d'agent réfrigérant et/ou d'agent lubrifiant (58) est disposée sur une face frontale (59) du doigt supérieur (30) s'étendant transversalement à la direction longitudinale (L).

5. Dispositif de coupe selon l'une quelconque des revendications 2 à 4, dans lequel la partie prolongée (48) est réalisée en forme de nervure.

6. Dispositif de coupe selon l'une quelconque des revendications 2 à 5, dans lequel la partie prolongée (48) est constituée du même matériau que la partie porte-outil (12).

7. Dispositif de coupe selon l'une quelconque des revendications 2 à 6, dans lequel la partie prolongée (48) est réalisée d'une seule pièce avec la partie porte-outil (12).

8. Dispositif de coupe selon la revendication 2, dans lequel la partie de passage (62) est menée à proximité de l'extrémité arrière (43) de la fente de serrage.
